# EUROPEAN PATENT APPLICATION

(11) **EP 1 460 533 A1**
(43) Date of publication of application: **22.09.2004**
(21) Application number: 03290662.0
(22) Date of filing: 17.03.2003
(51) Int. Cl.: G06F 9/44

(54) **Extensible graphical user interface development framework**

(71) Applicant: ALCATEL, 75008 Paris (FR)
(72) Inventor: Baccou Serge, 67450 Mundolsheim (FR)
(74) Representative: Rausch, Gabriele, Dr.

(57) **Abstract**

A method and an apparatus is provided for generating a GUI from a text file. Advantageously, the text file is built by selecting key words out of a library being predefined with different key words each associated with a logical link to some graphical item. In such a way, it is particularly easy to build a text file made of key words, said text file representing a GUI to be generated. It is possible to use a parser to solve or interpret the respective logical link associated to each key words. Such parser can have access to a list of rules defining its grammar. This will allow easily to extend its grammar with new rules. It will then be particularly simple to solve a specific organisation of key words in the text file allowing e.g. an insertion of some item into another or a factorisation of graphical items.

## Description

### Technical Field

The present invention relates to a method for generating a graphical user interface GUI to be displayed. Furthermore, it is related to an apparatus for generating a GUI to be displayed. It is also related to a computer-readable medium having a computer program comprising a code with a GUI generating software program to generate a GUI to be displayed.

### Background of the invention

The development of Graphical User Interfaces (GUI) requires development languages that are heavy to use among other due to tedious writing of repetitive portions of code. Furthermore, the maintainability of such developed GUI is an issue due to code repetitions and poor expression capabilities of existing languages like HTML for example.

Existing solutions for GUI development tool can be classified in two category:
i) GUI editors: It consists on code editors that can for instance generate code according to some developer's requests. The developer tells the editor "I want a button"; the editor generates several lines of code corresponding to the graphical representation of such a button. These editors give a too great importance to the graphical representation of the objects.
   Such an example of a method and apparatus for generating a GUI from a text file is described in US6,246,403. The apparatus comprises a computer configured to run a software program that enables a user to create a text file by using an input device coupled to an editor program. The text file represents a GUI being created. The computer also is configured to run a GUI constructing software program which receives the text file as input and which generates a data tree structure associated with the graphical user interface being created. The data tree structure can then be utilised by a GUI generating software program that receives the data tree structure, generates the GUI, and displays the GUI on a display monitor coupled to the computer. The text file created by the user preferably is a two-dimensional pictorial representation of the GUI and comprises textual characters arranged to form one or more boxes on the display monitor.
   With a GUI editor, each developer is obliged to work on a code that is generated by the editor i.e. it is necessary to complete, modify, adapt the code to obtain the desired graphical representation or to add a dynamical behaviour. This implies that the resulting code generated by the GUI editor must be comprehensible to be able to tune it and to maintain it. Usually, this is not the case for generated code. Also, it is not possible to factorise part of the code because the code is then generated several times. Each change must be done manually each time the generated code was duplicated by the editor. Furthermore, using existing editors makes it difficult for several developers to respect some binding graphical charter. They are submitted to errors and bugs due among other of the code repetition. The result is a dramatic waste of manpower.
ii) A second category of GUI development techniques comprise development techniques like XForm (from Nanoworks), XForms (from W3C), XUL (from Mozilla) or WSUI making use of a language to describe a GUI. They have some clear drawbacks namely that there is no real separation between the functional aspects (answers the "what" question like "What are the components of the user interface?") and the graphical representation (answers the "how" question like "How to display it?").

In some cases, the development techniques has impacts on the server side where the service is offer (a web server for instance). Therefore, those techniques cannot be used if the server cannot be modified for some reasons like performance reasons, size of the server binary for embedded solutions or simply due to the impossibility to act on the server.

These methods are limited. They are only able to generate one output type (XForm only generates HTML). They are only able to deals with forms (XForms). They are not "extensible": all these languages have a limited grammar with a closed set of components. The requirement of a component which is not supported by the existing grammar may put into question the whole development. It is simply not possible to implement all imaginable features. This is certainly the main drawback about existing solutions.

Existing GUI development techniques do not allow the share of a graphical charter between developers. Moreover, they introduce a lot of constraints about the server or the graphical user interface. Finally, all existing methods are not extensible. Therefore, the developer is not free to implement the customer needs and wishes.

### Summary of the invention

In view of the above, it is an object of the present invention to provide a method and some computing tools adapted for generating new graphical user interfaces without requiring any computing skills from the developer.

This object is achieved in accordance with the invention by applying a method for generating a GUI to be displayed by creating a text file representing said GUI. Advantageously, the text file is built by selecting key words out of a library being predefined with different key words each associated with a logical link to some graphical item. In such a way, it is particularly easy to build a text file made of key words, said text file representing a GUI to be generated. A factorisation of different graphical items as well as an insertion of a graphical item into another using the key words will not require anymore a high level of computing skill, the key words being possibly organised inside said text file following some specific structure like e.g. a tree one.

It is possible to use a parser to solve or interpret the respective logical link associated to each key words. Such parser can have access to a list of rules defining its grammar. This will allow to easily extend its grammar with new rules. With the help of such parser, it will be particularly simple to solve a specific organisation of key words in the text file allowing e.g. an insertion of some item into another or a factorisation of graphical items. It is also possible with a parser according to the present invention to apply new rules on the logical links so to extend the possibilities for generating a GUI according to the present invention.

The invention further relates to an apparatus for generating said GUI to be displayed on a display, the apparatus comprising: a computer configured to run an editor software program that enables a user to create and view on a display a text file. The user creates said text file by manipulating an input device in communication with the computer, latter being configured to run a GUI generating software program generating from said text file said GUI to be displayed on a display. The computer according to the invention is characterised in, that it is configured to run said library comprising a number of different key words associated with a logical link to a graphical item, said text file resulting from a selection by the user using said input device of key words out of said library. Furthermore, the GUI generating software program according to the invention comprises a parser adapted when applied on said text file to solve the respective logical link associated to each selected key words.

The invention also relates to a computer-readable medium having a computer program thereon, latter comprising code for converting said text file representing a GUI to be displayed. The code is characterised in, that it solves the respective logical link of the key words selected into said text file when converting it. In such a way, the code generates from said text file a GUI to be displayed.

The present solution is particularly adapted to produce Graphical User Interfaces, especially for multi-set portals in order to produce several outputs for several types of machine such as PC, GSM/Wap, GSM/MTS, Personal Digital Assistant (PDA), etc.

Advantageous developments of the invention are described in the dependent claims, the following description and the drawings.

### Description of the drawings

An exemplary embodiment of the invention will now be explained further with the reference to the attached drawings in which:
Fig. 1 is a schematic view of an architecture for generating a GUI according to the present invention;
Fig. 2a shows an example of a text file according to the invention;
Fig. 2b shows an example of a generated GUI according to the invention.

### Detailed description of preferred embodiments

A Graphical User Interface also called a "screen" can easily be described by an abstract description of the interface components - the graphical items - that composes the screen. This abstract description can be written using an easy-to-use language called for example XguiML for extensible Graphical Markup Language. This kind of language authorises the developer to create easily a text file being a description of the screen using a component tree comprising the different graphical items. This will permit that a component can be composed by other components i.e. to use some recursion procedure.

The different components/graphical items correspond to a "functional" description of some GUI item since e.g. a button is something that you can click on. Furthermore, the components/graphical items can correspond to a dynamic behaviour since e.g. when one clicks on a button, something shall happen.

The abstraction of the description occurs at two levels: abstraction of the output language and abstraction of graphical aspects. The abstract description is translated using a translation system from the simple abstract language to the complex output language. This can be performed using some generic parser. The translation system may contain some specific description of rules that are applied for each component using recursion. These rules being equivalent to some translation rules will build a grammar to be solved by the applied parser.

Here are the properties of the Xgui translation system:
- the rules description contains in a single location the graphical charter;
- the rules description allows code factorisation;
- recursion is used to allow component to contain other components;
- developers can easily introduces new rules procuring high level of extensibility.

The translation system according to the invention will be similar to a "checker" to be applied on the text file created with key words out of the library. The checker will have to check among other that said text file is build in accordance to the defined grammar.

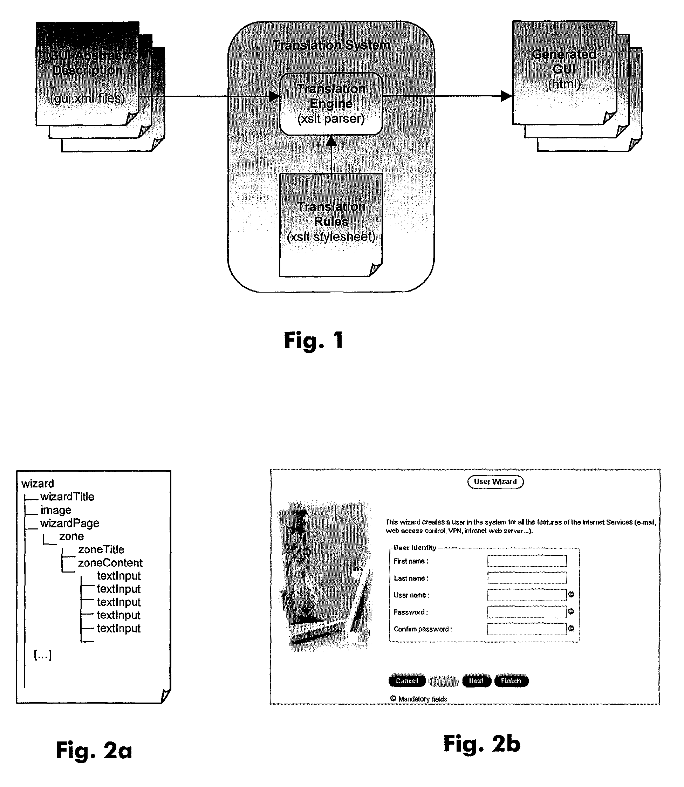

Figure 1 illustrates a Xgui Framework according to the present invention. All the needed key words will be collected into some created text file being the GUI abstract descriptions. Latter can be (for instance) implemented as XML files with an appropriate XML schema that gives the grammar of the XguiML abstract language. Abstract description contains the components - items - that make the user interface.

The translation system takes the GUI descriptions and with the help of translation rules translate the abstract components description into the output code. In parenthesis is indicated one possibility (among others) to implement the translation system: a single XSLT stylesheet contains the translation rules and a "standard" XSLT parser is used as the translation engine.

The translation system and especially the translation rules are stored in a single location being the graphical charter. In such a way, latter will be easily shared by a group of developers.

In this example, the generated Graphical User Interface is coded in HTML but there is no restriction to produce something else (WML for a Wap Phone, C++ code or any language used to build a User Interface). Moreover, the same description can generate several outputs in different formats (HTML, WML...).

On figure 2a is shown an example of a text file. The GUI abstract description contains a component tree that describes the components building the user interface. In this tree, a component can contain other component. For example, a wizard page contains a zone that contains several text inputs.

Some components can be implicit, that is to say the developer is not obliged to mention their presence. Their presence is implied by the presence of another component in the description. For instance, if a developer declares to require he wants a wizard, the translation system will automatically generates four buttons (Cancel, Back, Next and Finish) for navigation in the wizard. This automatic generation increases developers productivity.

On figure 2b is shown an example of generated Graphical User Interface according to the invention using Xgui Framework. In this example, the generated code is in HTML. As the code can be automatically generated - key words - this increases the productivity of the developer.

A graphical charter can be shared by several developers, from several teams from different location if let accessible through some network internet or intranet one. The charter is always respected because it is described once in the translation system.

The maintenance of the graphical user interface developed by this method is tremendously improved because developers must only maintain the translation rules and the GUI descriptions i.e. the text files (GUI descriptions are easier to maintain that the GUI output code). Extensibility is also one big advantage of this solution over other existing methods. It allows the creation of new components without limit.

## Claims

1. A method for generating a graphical user interface to be displayed, the method comprising the steps of:
creating a text file representing said graphical user interface to be generated,
**characterised by** the steps of
- providing a library comprising a number of different key words each associated with a logical link to a graphical item;
- selecting key words from said library to create said text file; and
- generating said graphical user interface from said text file at least by solving the respective logical links associated to each selected key word.

2. The method according to claim 1 **characterised in, that** said key words being computer language independent.

3. The method according to claim 1 **characterised in, that** said key words being possibly organised inside said text file following some specific structure allowing the insertion of an item into another item.

4. The method according to claim 1 **characterised by** the step of applying a parser for solving the respective logical links associated to each selected key word.

5. The method according to claim 4 **characterised in, that** said parser can be extended with new rules.

6. An apparatus for generating a graphical user interface to be displayed on a display, the apparatus comprising:
a computer configured to run an editor software program that enables a user to create and view on a display a text file, the user creating said text file by manipulating an input device in communication with the computer, the computer being configured to run a graphical user interface generating software program to generate from said text file a graphical user interface and to cause the graphical user interface to be displayed on a display,
**characterised in, that** the computer is configured to run a library comprising a number of different key words associated with a logical link to a graphical item, said text file resulting from a selection by the user using said input device of key words out of said library.

7. The apparatus according to claim 6 **characterised in, that** said graphical user interface generating software program comprises a parser being adapted when applied on said text file to solve the respective logical link associated to each selected key words.

8. A computer-readable medium having a computer program thereon, the computer program comprising:
code for converting a text file representing a graphical user interface to be displayed, while said code comprising a graphical user interface generating software program to generate from said text file a graphical user interface and to cause the graphical user interface to be displayed,
**characterised in, that** said code when converting said text file solves the respective logical link of the key words selected into said text file out of a library comprising a number of different key words associated with a logical link to a graphical item.

9. The computer-readable medium according to claim 8 **characterised in, that** said code comprising a parser with predefined rules to be applied on said logical links.
